(19) Europäisches Patentamt / European Patent Office / Office européen des brevets

(11) **EP 3 533 654 A1**

(12) **EUROPEAN PATENT APPLICATION**

(43) Date of publication:
04.09.2019 Bulletin 2019/36

(51) Int Cl.:
*B60K 28/02* (2006.01)   *B60W 40/08* (2012.01)

(21) Application number: 18191705.5

(22) Date of filing: 30.08.2018

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 02.03.2018 AU 2018201545

(71) Applicant: **Williams, Penelope**
**Mckail WA 6330 (AU)**

(72) Inventor: **Williams, Penelope**
**Mckail WA 6330 (AU)**

(74) Representative: **Murgitroyd & Company**
**Scotland House**
**165-169 Scotland Street**
**Glasgow G5 8PL (GB)**

(54) **A SYSTEM AND A METHOD FOR SUPPORTING SAFE OPERATION OF A VEHICLE**

(57)    The present invention refers to a system for monitoring and restricting a usage of a computing device associated with a person while driving a vehicle, the usage comprising one or more operations of the computing device, and a corresponding method. The system comprises a sensor, an image capture device to capture a set of images of the person and a processor in communication with the sensor and the image capture device. The processor is configured by one or more machine-readable instructions to determine the vehicle is in motion and the computing device is within a predetermined range of distance of the sensor, to detect the usage of the computing device by the person, to determine usage information in relation to the usage, to restrict operation of the computing device to disable the usage of the computing device, to receive the set of images of the person form the image capture device, to generate a usage report including the set of images and the usage information and to send the usage report to a server for the report to be stored on the server.

Fig. 2

## Description

### Field of the Invention

The present invention relates to road and vehicular safety and in particular to supporting, and seeking to ensure, safe operation of a vehicle.

The invention has been developed primarily for use in vehicles, where the drivers have a tendency to use a cellular phone or any other mobile handheld device while driving. The invention aims to monitor and limit or prevent such usage of the cellular phone or the mobile handheld device, until the vehicle comes to a halt. However, it will be appreciated that the invention is not limited to this particular field of use.

### Background of the Invention

Mobile handheld devices such as cellular phones have had a significant penetration into lives of people. People seem to be hooked on to such devices at all the times, for both business and pleasure, such as texting, or making a call or checking their social networking account, utilising cameras, using numerous software applications and Internet-related functions installed on their devices. However, such a trend has had drawbacks, especially related to safety of people when they are crossing a street or driving a vehicle. The mobile handheld devices act as a major source of distraction while the focus of a person should be on safety while on the road. This may result in the person losing sight of a vehicle just in front of the vehicle of the person, slower reaction times, the person making a wrong judgement while cornering or merging with the traffic or the person entering a wrong lane altogether, for example.

As per Centres for Disease Control and Prevention (CDC), each day in the United States alone, eight people are killed and over a thousand injured in crashes that are reported to involve a distracted driver. Hence, it is imperative, that systems and methods be developed which discourages the use of mobile handheld devices, while the person is driving.

The present invention seeks to provide a system and a method for ensuring safe operation of a vehicle, which will overcome or substantially ameliorate at least some of the deficiencies of the prior art, or to at least provide an alternative.

It is to be understood that, if any prior art information is referred to herein, such reference does not constitute an admission that the information forms part of the common general knowledge in the art, in Australia or any other country,

### Summary of the Invention

According to an aspect of the present invention, there is provided a system for monitoring and restricting a usage of a computing device associated with a person while driving a vehicle, the usage comprising one or more operations of the computing device, the system comprising:

> a sensor;
> an image capture device to capture a set of images of the person;
> a processor in communication with the sensor and the image capture device, the processor is configured by one or more machine-readable instructions to
> determine the vehicle is in motion and the computing device is within a predetermined range of distance of the sensor;
> detect the usage of the computing device by the person;
> determine usage information in relation to the usage;
> restrict operation of the computing device to disable the usage of the computing device;
> receive the set of images of the person form the image capture device;
> generate a usage report including the set of images and the usage information; and
> send the usage report to a server for the report to be stored on the server.

According to a further aspect of the present invention, there is provided a system for disabling a usage of a computing device associated with a person while driving a vehicle, the system comprising:

> a sensor;
> an image capture device to capture a set of images of the person;
> a processor in communication with the sensor and the image capture
> device, the processor is configured by one or more machine-readable instructions to
> determine the vehicle is in motion and the computing device is within a predetermined range of distance of the sensor;
> detect the usage of the computing device by the person;

determine usage information in relation to the usage;
restrict operation of the computing device to disable the usage of the computing device;
receive the set of images of the person from the image capture device;
generate a usage report including the set of images and the usage information and
send the usage report to a server for the report to be stored on the server.

In embodiments, the processor determines that the computing device is within a predetermined range of distance of the sensor before restricting operation of the computing device. This seeks to ensure that the operation of the computing device is restricted only when the computing device is close to the driver, which means the operation is made by the driver while driving. Also, the usage report is stored at the server. As a result, a regulatory authority, for example, police, may access the server to review the usage report.

The system may further comprise a Global Positioning System (GPS) receiver connected to the processor, the GI~S receiver is configured to

receive from a Global Positioning System (GPS) a first geographic location of the vehicle at a first time instant;
receive from the GPS a second geographic location of the vehicle at a second time instant; and
send the first geographic location, the first time instant, the second geographic location, and the second time instant to the processor;
and processor is further configured to determine the vehicle is in motion by determining a travelling speed of the vehicle based on the first geographic location, the first time instant, the second geographic location, and the second time instant;
and
determining the vehicle is in motion if the travelling speed of the vehicle is above a threshold.

The processor may be further configured to determine the computing device is within the predetermined range of distance of the sensor by:

obtaining a wireless signal transmitted from the sensor to the computing device, the wireless signal being transmitted at a power that allows the computing device to receive the wireless signal if the computing device is within the predetermined range of distance from the sensor; and
determining the computing device is within the predetermined range of distance.

The processor may be further configured to determine the vehicle is in motion by receiving a speed value from a speed sensor of the vehicle.

The wireless signal may comprise a Wi-Fi network signal and a Bluetooth network signal. The predetermined range of distance may be between 0 meter and 1 meter.

The predetermined range of distance may be between 0 meter and 1.5 meters.

When in use the sensor may be mounted at any of the following location:

a steering wheel of the vehicle;
a windscreen of the vehicle;
a window on a side of a driver of the vehicle;
a driver seat of the vehicle; and
a front dashboard of the vehicle.

The usage may comprise one or more of the following operations:

a use of an input interface of the computing device;
a making of a call;
a receiving of a call; and a
reading of a message.

The usage information may comprise a timestamp corresponding to a time instance of the usage.

The usage information may further comprise a geographical location tag corresponding to a location of the vehicle when the usage is detected.

According to an aspect of the present invention, there is provided a method for monitoring and restricting a usage of a computing device associated with a person while driving a vehicle, the usage comprising one or more operations of the computing device, the method comprising steps of:

determining the vehicle is in motion and the computing device is within a predetermined range of distance of a sensor;
detecting the usage of the computing device by the person;
determining usage information in relation to the usage;
restricting operation of the computing device to disable the usage of the computing device;
receiving a set of images of the person from an image capture device that captures the set of images of the person;
generating a usage report including the set of images and the usage information; and sending the usage report to a server for the report to be stored on the server.

According to another aspect of the present invention, there is provided a method for disabling a usage of a computing device associated with a person while driving a vehicle, the method comprising steps of:

determining the vehicle is in motion and the computing device is within a predetermined range of distance of a sensor;
detecting the usage of the computing device by the person;
determining usage information in relation to the usage;
restricting operation of the computing device to disable the usage of the computing device;
receiving a set of images of the person from an image capture device that captures the set of images of the person;
generating a usage report including the set of images and the usage information; and sending the usage report to a server for the report to be stored on the server.

Determining the vehicle is in motion may comprise:

receiving from a Global Positioning System (GPS) a first geographic location of the vehicle at a first time instant;
receiving from the GPS a second geographic location of the vehicle at a second time instant;
determining a travelling speed of the vehicle based on the first geographic location, the first time instant, the second geographic location, and the second time instant; and
determining the vehicle is in motion if the travelling speed of the vehicle is above a threshold.

Determining the computing device is-within a predetermined range of distance of the sensor may comprise:

obtaining a wireless signal transmitted from the sensor to the computing device, the wireless signal being transmitted at a power that allows the computing device to receive the wireless signal if the computing device is within the predetermined range of distance from the sensor; and
determining the computing device is within the predetermined range of distance.

The wireless signal may comprise a Wi-Fi network signal and a Bluetooth network signal.
The predetermined range of distance may be between 0 meter and 1 meter.
The predetermined range of distance may be between 0 meter and 1.5 meters.
The usage may comprise:

a use of an input interface of the computing device;
a making of a call;
a receiving of a call; and
a reading of a message.

The usage information may comprise a timestamp corresponding to a time instance of the usage.
The usage information further may comprise a geographical location tag corresponding to a location of the vehicle when the usage is detected.
According to an aspect of the present invention, there is provided a system for supporting safe operation of a vehicle, the system comprising a first device connected to a network, a second device connected to the network and a mobile computing device connected to the network. Further, the first device is configured to obtain a speed value of a travelling speed of the vehicle and transmit the speed value to the second device. Further, the second device is configured to receive the speed value from the first device, generate a motion signal indicative of the vehicle being in motion and transmit the motion signal to the mobile computing device. Further, the mobile computing device comprises a memory device configured to store machine-readable instructions and a processor configured to obtain the machine-readable instructions from the memory device and execute the machine-readable instructions, wherein the machine-readable instructions configure the processor to confirm a presence of the mobile computing device within a predetermined range of distance from the second device, on basis of strength of the network, receive the motion signal from the second device, detect usage of the mobile computing device for one or more restricted operations and block the mobile computing device against the usage, on receiving the motion signal, if the mobile computing device is within the predetermined range of distance from the second device. In this manner it is sought to be ensured that a driver is not distracted and full driver attention can be for the act of driving.

In one embodiment of the invention, the first device is further configured to transmit the speed value to the mobile computing device. This seeks to ensure that even if the second device is unable to generate the motion signal, the mobile computing device is still able to detect the motion of the vehicle.

In one embodiment of the invention, the first device is an electronic control module of the vehicle, the electronic control module being connected to a vehicle speed sensor.

In one embodiment of the invention, the first device is a vehicle speed sensor.

In one embodiment of the invention, the vehicle speed sensor is any one or more of a transmission mounted vehicle speed sensor and a transaxle mounted vehicle speed sensor.

In one embodiment of the invention, the first device further comprises a Global Positioning System (GPS) device configured to determine a location of the vehicle and transmit the location to the second device.

In one embodiment of the invention, the second device further comprises a GPS device configured to determine a location of the vehicle.

In one embodiment of the invention, the second device is further configured to transmit the location to the mobile computing device.

In one embodiment of the invention, the network is one of a Wi-Fi network and a Bluetooth network.

In one embodiment of the invention, a range value of the predetermined range varies between 0 m and 1m.

In one embodiment of the invention, the second device is mounted at any of the following:

> a steering wheel of the vehicle;
> a windscreen of the vehicle;
> a window on a side of a driver of the vehicle;
> a driver seat of the vehicle; and
> a front dashboard of the vehicle.

It may be ensured that the second device does not prove to be an obstruction in the act of driving in any manner.

In one embodiment of the invention, the one or more restricted operations comprise one or more of the following operations:

> a use of an input device;
> a making of a call;
> a receiving of a call;
> and a reading of a message.

In one embodiment of the invention, the processor is further configured to transmit a breach report to one or more remote computing devices, the breach report being indicative of an attempt made for use of the mobile computing device while the vehicle is still in motion. The breach report may be used by an authority such as a fleet operator or a traffic police personnel to study the driver behaviour over a period of time and/or issue tickets or any other such penalty.

In one embodiment of the invention, the breach report further comprises a timestamp corresponding to a time instance of the attempt.

In one embodiment of the invention, the breach report further comprises a geographical location tag corresponding to a location of the vehicle during the attempt.

According to another aspect of the present invention, there is provided a system for supporting safe operation of a vehicle, the system comprising a first device connected to a network, a second device connected to the network and a mobile computing device connected to the network. Further, the first device is configured to obtain a speed value of a travelling speed of the vehicle and transmit the speed value to the mobile computing device. Further, the mobile computing device comprises a memory device configured to store machine-readable instructions and a processor configured to obtain the machine-readable instructions from the memory device and execute the machine-readable instructions, wherein the machine-readable instructions configure the processor to receive the speed value from the first device, confirm a presence of the mobile computing device within a predetermined range of distance from the second device, on basis of a strength of the network, detect usage of the mobile computing device for one or more restricted operations and block the mobile computing device against the usage, if the mobile computing device is within the predetermined range of distance of the second device.

In one embodiment of the invention, the first device is an electronic control module of the vehicle, the electronic control module being connected to a vehicle speed sensor.

In one embodiment of the invention, the first device is a vehicle speed sensor.

In one embodiment of the invention, the vehicle speed sensor is any one or more of a transmission mounted vehicle speed sensor and a transaxle mounted vehicle speed sensor.

In one embodiment of the invention, the first device further comprises a Global Positioning System (GPS) device configured to determine a location of the vehicle and transmit the location to the second device.

In one embodiment of the invention, the second device further comprises a GPS device configured to determine a location of the vehicle.

In one embodiment of the invention, the second device is further configured to transmit the location to the mobile computing device.

In one embodiment of the invention, the network is one of a Wi-Fi network and a Bluetooth network.

In one embodiment of the invention, a range value of the predetermined range varies between 0m and 1m.

In one embodiment of the invention, the second device is mounted at any of the following:

a steering wheel of the vehicle;
a windscreen of the vehicle;
a window on a side of a driver of the vehicle;
a driver seat of the vehicle; and
a front dashboard of the vehicle.

In one embodiment of the invention, the one or more restricted operations comprise one or more of the following operations:

a use of an input device;
a making of a call;
a receiving of a call; and a reading of a message.

In one embodiment of the invention, the processor is further configured to transmit a breach report to one or more remote computing devices, the breach report being indicative of an attempt made for use of the mobile computing device while the vehicle is still in motion.

In one embodiment of the invention, the breach report further comprises a timestamp corresponding to a time instance of the attempt.

In one embodiment of the invention, the breach report further comprises a geographical location tag corresponding to a location of the vehicle during the attempt.

According to a further aspect of the present invention, there is provided a method for supporting safe operation of a vehicle, the method comprising steps of obtaining a speed value of a travelling speed of the vehicle, generating a motion signal indicative of the vehicle being in motion, transmitting the motion signal to the mobile computing device, through the network, confirming a presence of a mobile computing device within a predetermined range of distance, on basis of a strength of a network, detecting usage of the mobile computing device for one or more restricted operations and blocking the mobile computing device against the usage, on receiving the signal at the mobile computing device, if the mobile computing device is within the predetermined range of distance from the second device.

In one embodiment of the invention, the method further comprises a step of transmitting the speed value to the mobile computing device.

In one embodiment of the invention, the method further comprises a step of determining a location of the vehicle.

In one embodiment of the invention, the method further comprises a step of transmitting the location to the mobile computing device.

In one embodiment of the invention, the network is one of a Wi-Fi network and a Bluetooth network.

In one embodiment of the invention, a range value of the predetermined range varies between 0m and 1m.

In one embodiment of the invention, the one or more restricted operations comprise:

a use of an input device;
a making of a call;
a receiving of a call; and a
reading of a message.

In one embodiment of the invention, the method further comprises a step of transmitting a breach report to one or more remote computing devices, the breach report being indicative of an attempt made for use of the mobile computing device while the vehicle is still in motion.

In one embodiment of the invention, the breach report further comprises a timestamp corresponding to a time instance of the attempt.

In one embodiment of the invention, the breach report further comprises a geographical location tag corresponding to a location of the vehicle during the attempt.

According to an aspect of the present invention, there is provided a method for supporting safe operation of a vehicle, the method comprising steps of obtaining a speed value of a travelling speed of the vehicle and transmitting the speed value to a mobile computing device through a network, confirming a presence of the mobile computing device within a predetermined range of distance of a second device, on basis of a strength of the network, detecting usage of the mobile computing device for one or more restricted operations and blocking the mobile computing device against the usage, if the mobile computing device is within the predetermined range of distance from the second device.

In one embodiment of the invention, the method further comprises a step of determining a location of the vehicle.

In one embodiment of the invention, the method further comprises a step of transmitting the location to the mobile computing device.

In one embodiment of the invention, the network is one of a Wi-Fi network and a Bluetooth network.

In one embodiment of the invention, a range value of the predetermined range varies between 0m and 1m.

In one embodiment of the invention, the one or more restricted operations comprise:

a use of an input device;
a making of a call;
a receiving of a call; and a
reading of a message.

In one embodiment of the invention, the method further comprises a step of transmitting a breach report to one or more remote computing devices, the breach report being indicative of an attempt made for use of the mobile computing device while the vehicle is still in motion.

In one embodiment of the invention, the breach report further comprises a timestamp corresponding to a time instance of the attempt.

In one embodiment of the invention, the breach report further comprises a geographical location tag corresponding to a location of the vehicle during the attempt.

According to another aspect of the present invention, there is provided a non-transitory machine-readable medium, including machine-readable instructions stored thereon, when executed by a processor, configure the processor to confirm a presence of a mobile computing device within a predetermined range of distance from a second device, on basis of strength of a network, receive a motion signal from the second device, detect usage of the mobile computing device for one or more restricted operations and block the mobile computing device against the usage, on receiving the motion signal, if the mobile computing device is within the predetermined range of distance from the second device .

According to another aspect of the present invention, there is provided a non-transitory machine-readable medium, including machine-readable instructions stored thereon, when executed by a processor, configure the processor to receive a speed value from a first device, confirm a presence of a mobile computing device within a predetermined range of distance from a second device, on basis of a strength of a network, detect usage of the mobile computing device for one or more restricted operations and block the mobile computing device against the usage, on receiving the motion signal, if the mobile computing device is within the predetermined range of distance from the second device.

Other aspects of the invention are also disclosed.

**Brief Description of the Drawings**

Notwithstanding any other forms which may fall within the scope of the present invention, a preferred embodiment I preferred embodiments of the invention will now be described, by way of example only, with reference to the accompanying drawings in which:

Fig. 1 illustrates an exemplary system for disabling a usage of a computing device associated with a person while driving a vehicle in accordance with the present invention;

Fig. 2 illustrates an exemplary application of the system to a vehicle in accordance with an embodiment of the present invention;

Fig. 3 illustrates an exemplary method for disabling a usage of the computing device associated with the person while driving the vehicle in accordance with an embodiment of the present invention;

Fig. 4 illustrates an exemplary environment of devices to which various embodiments of the present invention may be implemented;

Fig. 5 illustrates an information flow diagram for supporting safe operation of a vehicle, in accordance with a preferred embodiment of the present invention;

Fig. 6 illustrates an information flow diagram for supporting safe operation of a vehicle, in accordance with another preferred embodiment of the present invention;

Fig. 7 illustrates a method for supporting safe operation of a vehicle, in accordance with a preferred embodiment of the present invention;

Fig. 8 illustrates a method for supporting safe operation of a vehicle, in accordance with another preferred embodiment of the present invention;

Fig. 9 illustrates a generic computing device in accordance with a preferred embodiment of the present invention; and

Fig. 10 illustrates an exemplary method for monitoring and restricting a usage of a computing device associated with a person while driving a vehicle in accordance with an embodiment of the present invention.

**Description of Embodiments**

First Set of First Embodiments

It should be noted in the following description that like or the same reference numerals in different embodiments denote the same or similar features.

As will be described in further detail, according to aspects of the invention are provided systems and methods for monitoring and restricting a usage of a computing device associated with a person whilst driving a vehicle, the usage comprising one or more operations of, or that can be performed on or via, the computing device.

Embodiments of the system of the invention are operable to monitor use of the computing device, and may restrict or disable its operation, as appropriate in the circumstances of the use.

In the context of the invention, "disabling a usage" is not intended to refer to necessarily completely preventing the computing device from being used, but rather to preventing one or more operations of the computing device from being used. In this regard, operations that the usage could comprise include a use of an input interface of the computing device, the making of a call, the receiving of a call, and a reading of a message. Other operations of the computing device, not being a specified usage to be disabled, could still be used. In this way, the disablement of specific usage operations restricts what can be done with the computing device. Of course, this does not preclude implementations of the invention where the usage comprises any operation of the computing device, in which case, the restriction resulting from the disablement would be the inability to perform any operation on the computing device.

In embodiments, to monitor use of the computing device, the system is operable to perform a monitoring function in which a processor is configured by one or more machine-readable instructions to determine the vehicle is in motion and the computing device is within a predetermined range of distance of the sensor, detect the usage of the computing device by the person, and determine usage information in relation to the usage. Together, these "determining", "detecting" and "determining" operations implement a monitoring process that results in the system functioning to restrict operation of the computing device to disable the usage of the computing device, depending on the outcome of the monitoring process.

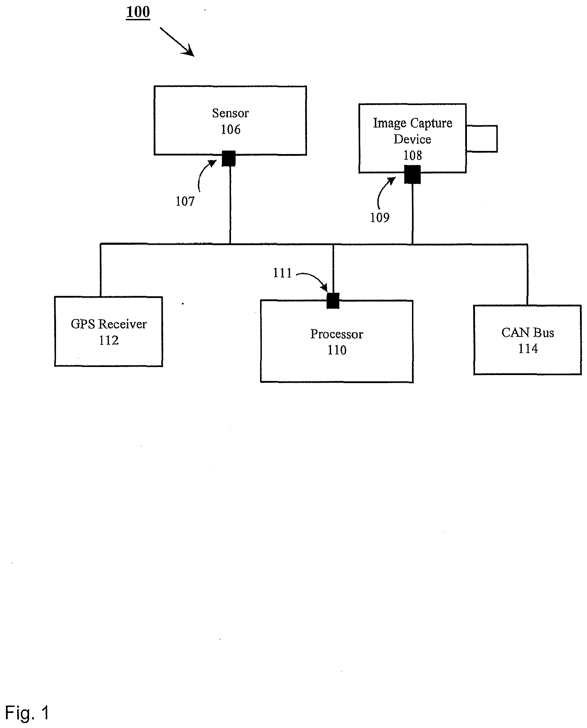

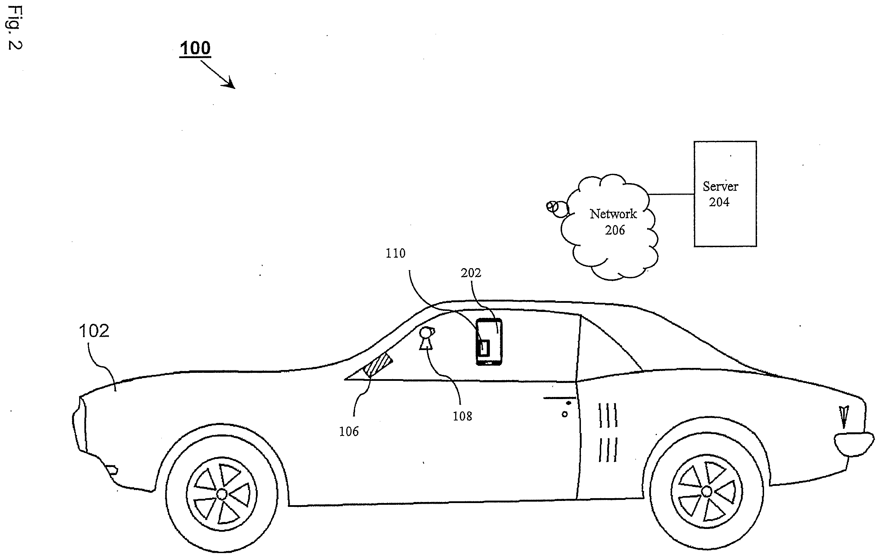

Figure 1 illustrates an exemplary system 100 for disabling a usage of a computing device associated with a person while driving a vehicle in accordance with the present invention. As shown in Figure 1, the system 100 comprises a sensor 106, an image capture device 108 and a processor I IO. The sensor 106, the image device 108 and the processor 110 include communication interfaces 1 07, 109, 111 respectively in order for the processor 108 to be in communication with the sensor 106 and the image capture device 109. The image capture device 108 in this example is a camera configured to capture still or moving images. The processor 110 is a processor of the computing device 202 (see Figure 2) associated with the person and configured to execute machine-readable instructions to carry out tasks as defined by the machine-readable instructions.

One or more of the communication interfaces 107, 109, 111 can be wireless communication interfaces, for example, WiFi or Bluetooth interfaces. Therefore, the sensor 106 and the image device 108 are connected to the processor 110 via wireless links. In other examples, one or more the communication interfaces 107, 109, 111 are wired communication interfaces, for example, Ethernet interfaces. As a result, the sensor 106 and the image device 108 are connected to the processor 110 by wired links, for example, communication cables. Further, although the image device 108 and the processor 110 are shown as separate elements, they can be integrated together in other examples.

Figure 2 illustrates an exemplary application 200 of the system 100 to a vehicle 102 such as a car or a bus or truck or any other motorised vehicle in accordance with an embodiment of the present invention. In the exemplary application 200, the sensor 106 is mounted at a position close to the person (i.e., the driver) driving the vehicle 102, i.e., the windscreen of the vehicle 102. The sensor 106 can also be mounted at the steering wheel of the vehicle 102, the windscreen of the vehicle 102, a window on the side of the driver of the vehicle 102; the driver seat of the vehicle 1 02, a front dashboard of the vehicle 102, etc. The image capture device 108 is mounted at a position in the vehicle 102 where the images of the driver can be captured by the image capture device 108 while driving the vehicle 102, for example, the dashboard of the vehicle 102.

The computing device 202 is for example a mobile phone of the driver, and typically includes a processor with computing capacities, a memory that stores machine-readable instructions to be executed by the processor, and one or more communication interfaces that provide access to Internet, cellular network, WiFi, Bluetooth network, etc. The processor 110 in the application 200 is the processor of the computing device 202 to take advantage of the computing capacities of the computing device 202.

During initialisation of the system, one or more machine-readable instructions are loaded into the memory of the computing device 202 from a storage device. The one or more machine-readable instruction can also be included in a software application that can be downloaded from an 'application platform such as Apple Store or Google Play via the Internet interface of the computing device 202. The processor 110 obtains the machine• readable instructions from the memory of the computing device 202 and is configured by the machine-readable instructions to perform the method as described below. In the present disclosure, the computing device 202 is described as a mobile phone operating on Android platform and some functions for Android platform are used to describe how certain steps of the method are implemented on Android platform. However, it should be understood that the method can also be implemented in other computing devices (for example, a personal digital assistant (PDA), a tablet computer etc.) operating on other operating systems, for example, Apple, Windows, etc

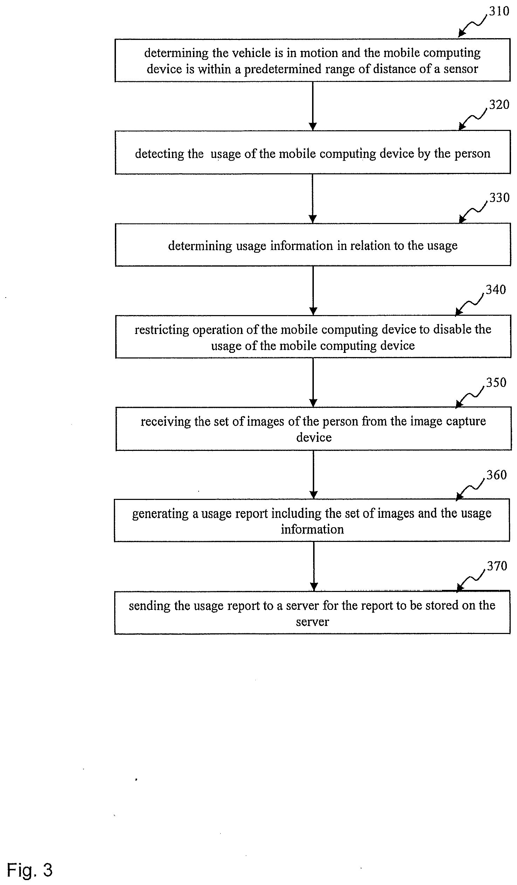

Figure 3 illustrates an exemplary method 300 for disabling a usage of the computing device 202 associated with the person while driving the vehicle 102 in accordance with an embodiment of the present invention.

The processor 110 further determines 310 that the vehicle 102 is in motion based on the travelling speed of the vehicle 102. As an example, the system 100 further includes a Global Positioning System (GPS) receiver 112 connected to the processor 110. The GPS receiver 112 is configured to receive from a Global Positioning System (GPS) a first geographic location of the vehicle 102 at a first time instant. The GPS receiver 112 further receives from the GPS a second geographic location of the vehicle 102 at a second time instant. The GPS receiver 112 then sends the first geographic location, the first time instant, the second geographic location and the second time instant to the processor 110. The processor 110 in turn determines the travelling speed of the vehicle 102 based on the first geographic location, the first time instant, the second geographic location, and the second time instant. The travelling speed can be calculated as follows:

$$travelling\ speed =$$

$$\underline{distance\ between\ the\ first\ location\ and\ the\ second\ location}$$

$$time\ difference\ between\ the\ first\ instant\ and\ the\ second\ time\ instant$$

As another example, the system 100 further includes a vehicle interface (for example, Controller Area Network (CAN) bus) 114 that interfaces with the vehicle 102, particularly, the Electronic Control Unit (ECU) of the vehicle 102. The ECU of the vehicle 102 is connected to a vehicle speed sensor of the vehicle 102. Therefore, the processor 102 receives the travelling speed of vehicle 102 via the CAN bus 114 from the ECU of the vehicle 102.

As a further example, by invoking getspeed() method of Location class on Android platform, the processor 110 is able to determine the travelling speed of the vehicle 102.

The processor 110 determines the vehicle 102 is in motion if the travelling speed of the vehicle 102 is above a threshold, for example, 5 km/h.

The processor 110 also determines that the computing device 202 is within a predetermined range of distance of the sensor 106. This ensures that the operation of the computing device 202 is restricted only when the computing device 202 is close to the driver, which means the operation is made by the driver while driving. For example, the sensor 106 includes a WiFi or Bluetooth transmitter and sends a wireless signal (e.g., a beacon signal) through the transmitter. The beacon signal is transmitted at a power that allows the computing device 202 to receive the beacon signal if the computing device 202 is within the predetermined range of distance from the sensor 106. The processor 110 obtains the beacon signal received at the computing device 202 and determines the computing device 202 is within the predetermined range of distance of the sensor 106. On the other hand, the computing device 202 will not receive the beacon signal if the computing device 202 is positioned outside the predetermined range of distance. Depending on the size of the vehicle 102, the predetermined range of distance is between 0 meter and 1 meter or between 0 meter and 1.5 meters.

If a passenger sitting on a passenger seat operates the computing device 202 of the driver while the driver is driving the vehicle 102, as the distance between the computing device 202 and the driver is outside the predetermined range of distance, the operation of computing device 202 is not deemed to be made by the driver and thus the operation of the computing device 202 will not be restricted.

The processor 110 of the computing device 202 detects 320 a usage of the computing device 202 while the driver is using the computing device 202. For example, if the computing device 202 is a mobile phone, the usage includes one or more of: using an input interface (for example, a keyboard, a touch screen) of the mobile phone, making a call through the mobile phone, receiving a call through the mobile phone and reading a message through the mobile phone. For example, the processor 110 invokes the GestureDetectorCompat and MotionEventCompat classes to detect usage of the computing device 202.

Once the usage of the computing device 202 is detected while the driver is driving the vehicle 102, the processor 110 determines 330 usage information in relation to the usage. The usage information includes a timestamp corresponding to a time instance of the usage. The usage information also includes a geographical location tag corresponding to a location of the vehicle when the usage is detected.

In order to support, and seek to ensure, safe operation of the vehicle 102, the processor 110 restricts 340 operation of the computing device 202 to disable the usage of the mobile computing device. For example, on Android platform, the processor 110 invokes invisible ProgressDialog by setting ProgressDialog cancel-able false, As a result, the driver is not able to access the user interface of the computing device 102 and thus cannot operate the computing device 102 any more.

Following the restriction on the usage of the computing device 202, the processor 110 instructs the image capture device 108 to capture a set of images of the driver driving the vehicle 102 and receives 350 the set of images of the driver from the image capture device 108.

The processor 110 generates 360 a usage report including the set of images of the driver and the usage information. The processor 110 further sends 370 the usage report to a remote server 204 through a communication network 206, such as a cellular network, that the computing device 202 has access to. The usage report is indicative of an attempt made for use of the computing device 202 while the vehicle 102 is still in motion. The usage report comprises for example a timestamp corresponding to a time instance of the attempt. The breach report may further comprise a geographical location tag corresponding to the location of the vehicle 102 when the attempt was made. Therefore, the usage report is stored at the remote server 204. A regulatory authority, for example, police, may access the remote server 204 to review the usage report.

In embodiments, the usage report may be communicated to a device other than, or additional to, the remote server 204.

In the example application 200 described above, the image capture device 108 is separate from the computing device 202 being monitored. In another example, the system 100 uses the camera integrated within the computing device 202 without departing from the scope of the invention if the computing device 202 includes a camera. In this case, the communication interface 109 of the image capture device 108 and the communication interface 110 of the processor 110 are included in the computing device 202. When in use the computing device 202 is oriented to enable the camera to capture the images of the driver.

Second Set of Embodiments

It should be noted in the following description that like or the same reference numerals in different embodiments denote the same or similar features.

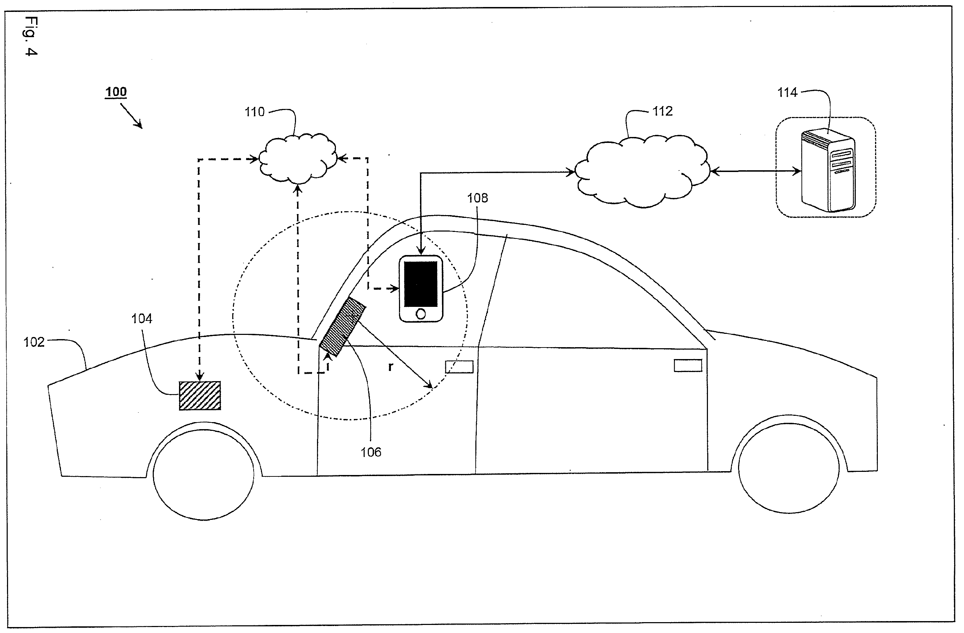

Figure 4 illustrates an exemplary environment 100 of devices to which various embodiments of the present invention may be implemented. As shown in figure 4, the environment 100 comprises a vehicle 102 such as a car or a bus or tuck. The vehicle 102 is provided with a first device 104. In one embodiment of the invention, the first device 104 is an electronic control unit (ECU) of the vehicle 102. Further, the ECU is connected to a vehicle speed sensor. In that manner it is envisaged that the vehicle speed sensor is configured to generate a magnetic pulse in a form of a wave proportional to a speed of the vehicle 102. In another embodiment, the first device 104 is the speed sensor itself. The vehicle speed sensor may be of type selected from a group consisting of a Hall-Effect sensor or Reed switch type sensor. Further, in various embodiments the vehicle speed sensor is any one or more of a transmission mounted vehicle speed sensor and a transaxle mounted vehicle speed sensor.

The first device 104 is connected to a network 110. It is envisaged that the network 110 is a short range local network within the vehicle 102, such as, but not limited to, a Wi-Fi network or a Bluetooth network. Further, connected to the network 110 is a second device 106. It is envisaged that the second device 106 is provided in proximity of a driver and mounted at any of the following:

a steering wheel of the vehicle;

a windscreen of the vehicle;
a window on a side of a driver of the vehicle;
a driver seat of the vehicle;
and a front dashboard of the vehicle.

In that manner, it is envisaged that the second device 106 may be secured using a fastening mechanism such as a cable tie locking brace or using other fasteners such as screws, nuts and bolts etc. Further, it is envisaged that the second device 106 is an electronic device capable of sending and receiving signals through the network 110. The second device 106 may or may not be installed with a micro-controller for processing of the received signals and for generation of the signals needed to be sent.

Further connected to the network 110 is a mobile computing device 108. The mobile computing device 108 is associated with the driver of the vehicle 102. In various embodiments, the mobile computing device 108 is one of, but not limited to, a cellular phone, a personal digital assistant (PDA) or a tablet computer etc. The mobile computing device 108 is further connected to one or more remote computing devices 114 through a second network 112. It is envisaged that the second network 112 is a wide area network (WAN) such as a cellular network or the internet and is not confined inside the vehicle 102 alone. The one or more remote computing device 114 may be associated with an authority such as a fleet operator of a fleet of a vehicle or traffic police etc. The embodiments of the system and the method for ensuring safe operation of the vehicle can now be understood taking the exemplary environment 100 as reference.

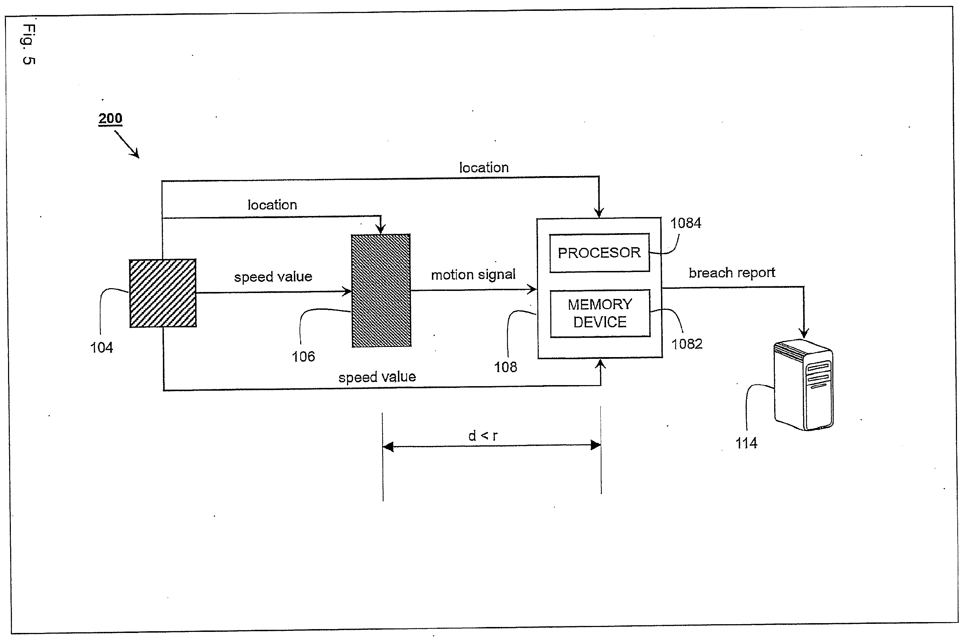

Figure 5 illustrates an information flow diagram for supporting, and seeking to ensure, safe operation of the vehicle 102, in accordance with .a preferred embodiment 200 of the present invention. As shown in figure 2, the first device 104 is configured to obtain a speed value of a travelling speed of the vehicle 102 and transmit the speed value to the second device 106, through the network 110. Further, the second device 106 is configured to receive the speed value from the first device 104 and generate a motion signal indicative of the vehicle 102 being in motion. In that manner it is envisaged that the second device 106 comprises a micro-controller configured to receive the speed signal and generate the motion signal for a non-zero speed value of the vehicle 102. Further, the second device 106 is configured to transmit the motion signal to the mobile computing device 108 through the network 110.

In another embodiment, it is envisaged that the first device 104 is further configured to transmit the speed value directly to the mobile computing device 108 through the network 110. This is to seek to ensure that if the second device 106 fails to deliver the motion signal, the mobile computing device 108 would still be able to receive a signal indicative of the vehicle 102 being in motion. The mobile computing device 108 comprises a memory device 1082 configured to store machine-readable instructions and a processor 1084 configured to obtain the machine-readable instructions from the memory device 1082 and execute the machine-readable instructions. In one embodiment, the machine-readable instructions are made available in a form of a non-transitory machine readable medium such as a CD-ROM or a DVD-ROM or a flash drive. In another embodiment, the machine-readable instructions may be downloaded directly into the memory device 1082 through the second network 112. Further, the machine• readable instructions configure the processor 1084 to confirm a presence of the mobile computing device 108 within a predetermined range of distance 'r' (as shown in figure 1) from the second device 106, on basis of strength of the network 110.

In that manner, it is envisaged that either one or more of the second device 106 and the mobile computing device 108 act as a beacon sending signals in form of pings and determine distance 'd' between the second device 106 and the mobile computing device 108 based on a time taken by the ping to travel forth and back. In one embodiment, a range value of the predetermined range varies between 0 m and 1 m. This range value ensures that the mobile computing device 108 is blocked only when the drive is using the mobile computing device 108 and not a co-passenger.

Further, the machine readable instructions configure the processor 1084 to receive the motion signal from the second device 106. Further, the machine readable instructions configure the processor 1084 to detect usage of the mobile computing device 108 for one or more restricted operations. In one embodiment, the one or more restricted operations comprise, but are not limited to:

a use of an input device, such as a touchpad or a keyboard or a joystick;
a making of a call;
a receiving of a call; and
a reading of a message such as through a number of instant messaging applications.

Further, the machine readable instructions configure the processor 1084 to block the mobile computing device 108 against the usage, on receiving the motion signal, if the mobile computing device 108 is within the predetermined range of distance 'r' from the second device 106. It is envisaged, that the processor 1084 is configured to lock a screen of the mobile computing device 108 and only may allow the driver to make emergency calls. In other embodiments, the processor 1084 may be configured to put the mobile computing device 108 to inactive or sleep mode or completely deactivate a SIM card for repeated attempts. This way the processor 1084 ensures that the driver is able to devote his or her undivided attention to the act of driving the vehicle 102 and prevents the driver from being distracted.

In various embodiments, any one of the first device 104, the second device 106 and the mobile computing device 108 comprises a Global Positioning System (GPS) device configured to determine a location of the vehicle 102. The location then gets transmitted to the mobile computing device 108 and received by the processor 1084.

The processor 1084 is further configured to transmit a breach report to the one or more remote computing devices 114, through the second network 112. The breach report is indicative of an attempt made for use of the mobile computing device 108 while the vehicle 102 is still in motion. In one embodiment, the breach report further comprises a timestamp corresponding to a time instance of the attempt. In one embodiment, the breach report further comprises a geographical location tag corresponding to the location of the vehicle 102 during the attempt. In that manner, both the timestamp and the geographical location tag may be stored in a storage device for future reference, such as by regulatory authorities like traffic police.

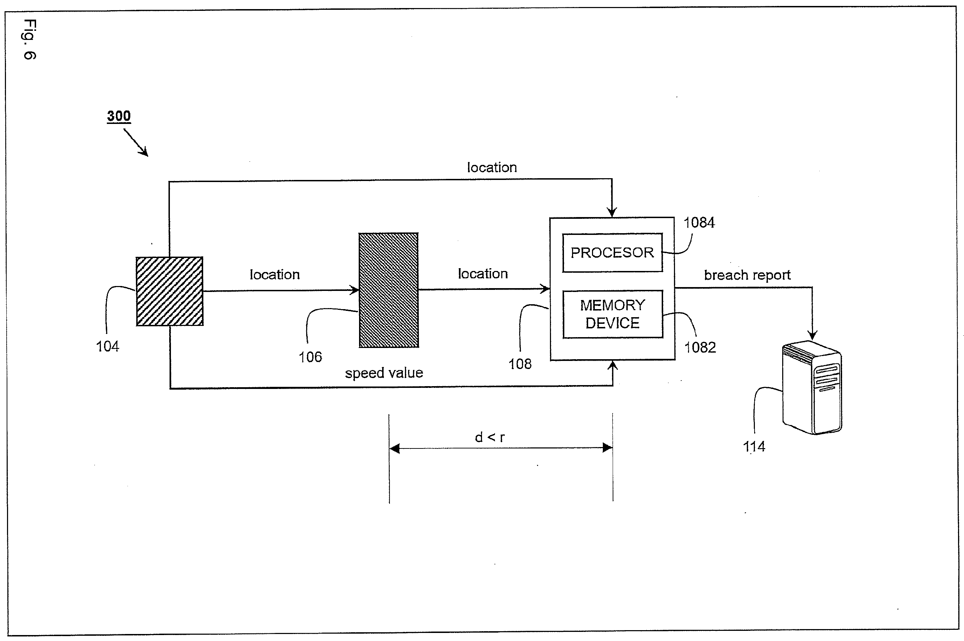

Figure 6 illustrates an information flow diagram for supporting, and seeking to ensure, safe operation of the vehicle 102, in accordance with another preferred embodiment 300 of the present invention. In this embodiment, the motion signal is not generated by the second device 106, instead the processor 1084 is configured to receive the speed value from the first device 104 and determine that the vehicle is in motion for a non-zero speed value. This way an additional step of generating the motion signal is eliminated and the system becomes comparatively faster and more energy efficient. Also, the system would still function in an event of a failure of the second device 106 to generate the motion signal.

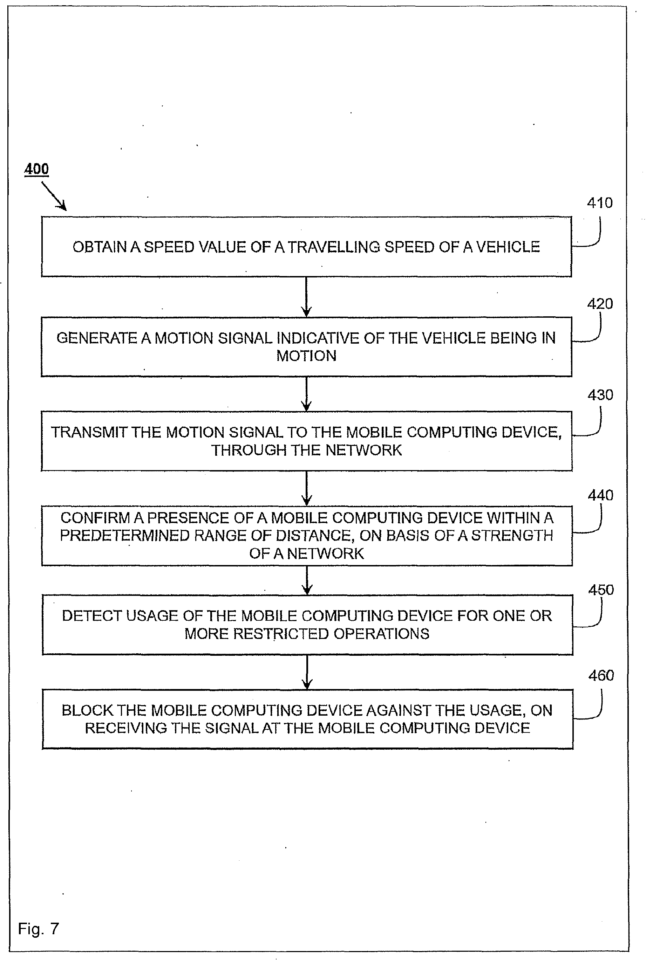

Figure 7 illustrates a method 400 for supporting, and seeking to ensure, safe operation of a vehicle, in accordance with a preferred embodiment of the present invention. The method 400 begins at step 410 by obtaining, by the first device 104 the speed value of the travelling speed of the vehicle 102. Further, the first device 104 transmits the speed value to the second device 106. In one embodiment, the first device 104 transmits the speed value to the mobile computing device 108.

At step 420, the second device 106 generates the motion signal indicative of the vehicle 102 being in motion. At step 430, the second device 106 transmits the motion signal to the mobile computing device 108, through the network 110. At step 440, the processor 1084 confirms the presence of the mobile computing device 108 within the predetermined range of distance 'r', on the basis of the strength of the network 110. At step 450, the processor 1084 detects the usage of the mobile computing device 108 for the one or more restricted operations. At step 460, the processor 1084 blocks the mobile computing device 108 against the usage, on receiving the signal at the mobile computing device 108, if the mobile computing device 108 is within the predetermined range of distance from the second device 106.

In one embodiment of the invention, a GPS device in any one or more of the first device 104 and the second device 106 and the mobile computing device 108 determines the location of the vehicle 102. Further, any one of the first device 104 and the second device 104 transmits the location to the mobile computing device. In one embodiment of the invention, the processor 1084 transmits the breach report to the one or more remote computing devices 114 through the second network 112.

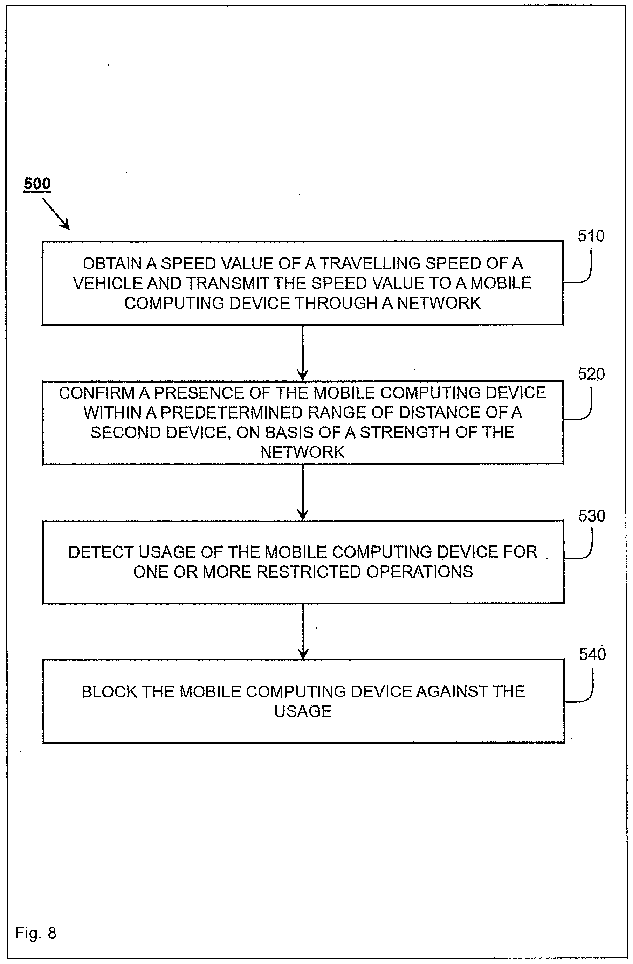

Figure 8 illustrates a method 500 for supporting, and seeking to ensure, safe operation of a vehicle, in accordance with another preferred embodiment of the present invention. The method begins at step 510, when, the first device 104 obtains the speed value of the travelling speed of the vehicle 102 and transmits the speed value to the mobile computing device 108 through the network 110. At step 520, the processor 1084 confirms the presence of the mobile computing device 108 within the predetermined range of distance 'r' of the second device 106, on the basis of the strength of, the network 110. At step 530, the processor 1084 detects the usage of the mobile computing device 108 for the one or more restricted operations. At step 540, the processor 1084 blocks the mobile computing device 108 against the usage, if the mobile computing device 108 is within the predetermined range of distance 'r' from the second device 106.

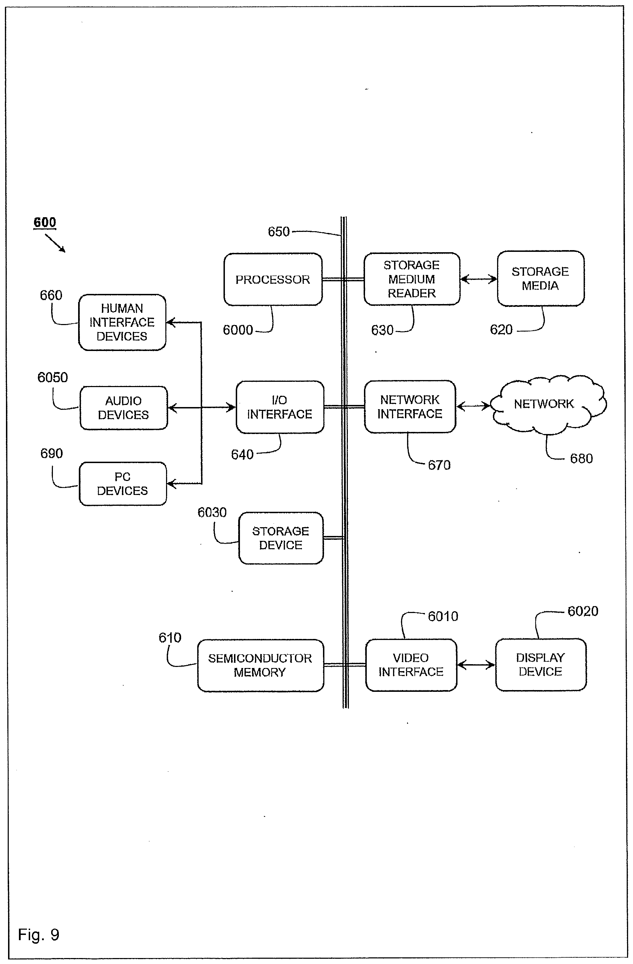

Figure 9 illustrates a generic computing device 600 in accordance with a preferred embodiment of the present invention. In a preferred embodiment, the computing device 600 takes the form of the one or more remote computing devices 114. In this manner, the computing device 600 is adapted to comprise functionality for communication with the second network 112 and storage capability for storing the breach reports.

However, it should be noted that the mobile computing device 108 may also be depicted as the generic computing device 600. In this manner, the generic computing device 600 may comprise differing technical integers, such as the display device 6020, one or more human interface devices 660 and the like. In other words, the technical integers of the generic computing device 600 as shown in figure 6 are exemplary only and variations, adaptations and the like may be made thereto within the purposive scope of the embodiments described herein and having regard for the particular application of the generic computing device 600.

In particular the steps of the method 400 and 500 for supporting, and seeking to ensure, safe operation of a vehicle, as described above, may be implemented as computer program code instructions executable by the generic computing device 600. The computer program code instructions may be divided into one or more computer program code instruction libraries, such as dynamic link libraries (DLL), wherein each of the libraries performs a one or more steps of the method. Additionally, a subset of the one or more of the libraries may perform graphical user interface tasks relating to the steps of the method.

The generic computing device 600 comprises semiconductor memory 610 comprising volatile memory such as random access memory (RAM) or read only memory (ROM). The memory 610 may comprise either RAM or ROM or a combination of RAM and ROM.

The generic computing device 600 comprises a computer program code storage medium reader 630 for reading the computer program code instructions from computer program code storage media 620. The storage media 620 may be optical media such as CD-ROM disks, magnetic media such as floppy disks and tape cassettes or flash media such as USB memory sticks.

The device further comprises 1/0 interface 640 for communicating with one or more peripheral devices. The 1/0 interface 640 may offer both serial and parallel interface connectivity. For example, the 1/0 interface 640 may comprise a Small Computer System Interface (SCSI), Universal Serial Bus (USB) or similar 1/0 interface for interfacing with the storage medium reader 630. The 1/0 interface 640 may also communicate with the one or more human interface devices (HID) 660 such as keyboards, pointing devices, joysticks and the like. The 1/0 interface 640 may also comprise a computer to computer interface, such as a Recommended Standard 232 (RS-232) interface, for interfacing the device 600 with one or more personal computer (PC) devices 690. The 1/0 interface 640 may also comprise an audio interface for communicate audio signals to one or more audio devices 6050, such as a speaker or a buzzer.

The device 600 also comprises a network interface 670 for communicating with one or more computer networks 680. The network 680 may be a wired network, such as a wired Ethernet™ network or a wireless network, such as a Bluetooth™ network or IEEE 802.11 network. The network 680 may be a local area network (LAN), such as a home or office computer network, or a wide area network (WAN), such as the Internet or private WAN.

The device 600 comprises an arithmetic logic unit or processor 6000 for performing the computer program code instructions. The processor 6000 may be a reduced instruction set computer (RISC) or complex instruction set computer (CISC) processor or the like. The device 600 further comprises a storage device 6030, such as a magnetic disk hard drive or a solid state disk drive.

Computer program code instructions may be loaded into the storage device 6030 from the storage media 620 using the storage medium reader 630 or from the network 680 using network interface 670. During the bootstrap phase, an operating system and one or more software applications are loaded from the storage device 6030 into the memory 610. During the fetch-decode-execute cycle, the processor 6000 fetches computer program code instructions from memory 610, decodes the instructions into machine code, executes the instructions and stores one or more intermediate results in memory 610. In this manner, the instructions stored in the memory 610, when retrieved and executed by the processor 6000, may configure the computing device 600 as a special-purpose machine that may perform the functions described herein.

The device 600 also comprises a video interface 6010 for conveying video signals to a display device 6020, such as a liquid crystal display (LCD), cathode-ray tube (CRT) or similar display device. The device 600 also comprises a communication bus subsystem 650 for interconnecting the various devices described above. The bus subsystem 650 may offer parallel connectivity such as Industry Standard Architecture (ISA), conventional Peripheral Component Interconnect (PCI) and the like or serial connectivity such as PCI Express (PCle), Serial Advanced Technology Attachment (Serial ATA) and the like.

The systems and the methods of the embodiments described above offer a number of advantages. First the systems and the methods support, and seek to ensure, full driver attention towards the act of driving, making the driving safer for all the people inside the vehicle or out on the streets. Further, the system can be implemented using very rudimentary electronic devices hence offering simplicity and cost benefits. Further, the breach reports may be stored in a storage device in form of a database for future reference and conducting analysis of patterns of driving habits of a number of drivers.

It can be seen that embodiments of the invention provide a safety system comprising several separate components operably connected including: software which may be downloaded through an App; a camera (either internal, external, or both) which can be either internally (on the phone) or externally located on the windscreen similarly located as a dashcam would; hardware in the form of a sensor that is situated in the location of the steering wheel or dash near to the driver; and an external interface that stores data captured and is operable for monitoring, reporting and restricting purposes.

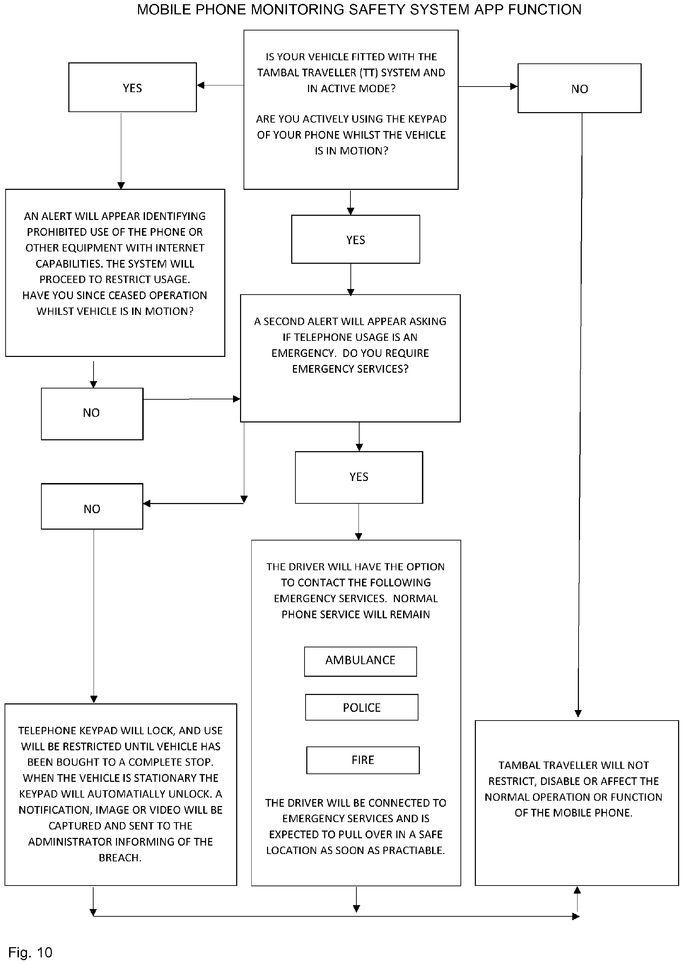

Combined, these and other components of the system work together as illustrated in Figure 10 of the drawings, for example, to monitor, restrict and/or disable the use and function (or any prolonged active keypad or use of screen) on a mobile phone when the operator/user is driving, and the vehicle is in motion.

The system may be provided under the Trade Mark Tambal Traveller™, and works to restrict certain functions of mobile phones (eg Facebook, texting, email, YouTube, SnapChat, and other forms of social media) whilst driving a vehicle, thereby seeking to put safety first.

In embodiments, the sensor is multi-purpose, and operable to:

- determine the speed value of the vehicle by way of GPS and/or wireless speed sensor (ie. GPS speedometer);
- determine the range of a mobile phone that has Internet, Bluetooth or WiFi capabilities, relating to where the sensor has been positioned to the driver;
- become active when a mobile phone or any other equipment that has Internet capabilities is within range and there is detection of motion or an increase in the speed value of the vehicle;
- register the active use of an input mechanism such as a keypad on a hand-held mobile phone or other electronic equipment that has internet and Bluetooth capabilities; and
- send and receive information between a) mobile phone or any other equipment that has Internet and Bluetooth capabilities, b) the sensor, c) Internet conduits, for example iCloud and other technologies capable of carrying, relaying and transferring data and information.

In regard to positioning of the sensor, in embodiments it is to be securely fitted on, near, or close to the steering wheel or the control point of a vehicle. It can be fitted to the car body so long as it is in close proximately to the driver, in embodiments. The sensor can be fitted either retrospectively or during vehicle manufacture.

In embodiments, the sensor can be semi-hard fitted to hard fitted depending on whether it is retrospectively fitted or fitted during vehicle manufacture respectively. It will not be easily removed, in embodiments. It may have a tamper-proof seal which will join the sensor to the desired location on the vehicle. In such embodiments, it may be operable to send information to an administrator of the system if it has been removed, or an attempt has been made to remove it.

Regarding detection of phone and other equipment, in embodiments, the sensor may have Bluetooth and capabilities to detect a mobile phone or other equipment with Internet capabilities. It may have the option of pre-determining a detection range of up to 1 metre (red zone) from the sensor.

In embodiments, the camera component has a multi-purpose feature. The camera can be internal to the mobile phone, or external and placed on the windscreen within range of and operable to communicate with the sensor. The camera, in embodiments, is operable to:

- work in conjunction with the sensor;
- record imagery (either or both video or still photography);
- send and receive information between a) mobile phone or any other equipment that has internet, Bluetooth or WiFi capabilities, b) the sensor, c) Internet conduits, for example iCloud and other technologies capable of carrying, relaying and transferring information; and
- record external information relating to environmental factors, for example Dashcam capabilities.

In embodiments, the camera is operable to become active when a mobile phone or any other equipment with internet capabilities is within range of the sensor and the vehicle is in motion.

This feature allows greater consistency and effectiveness to the identification of a breach and the identification of the driver in breach.

In embodiments, the software app is downloaded to the phone or the mobile phone monitoring safety system by the administrator and/or owner. It will have Bluetooth, WiFi and GPS and other compatible identifying capabilities. The app will be synced to the sensor for purpose of speed detection/value, and range of distance between mobile phone and any other method of positive identification of mobile phones and other equipment with internet capabilities, in embodiments.

In embodiments, the External Computer Monitoring System comprises an external computer or device which is operable to receive and/or send information to and/or from:

- the sensor;
- the camera; and
- the mobile phone or other equipment with Bluetooth, Wifi or GPS capabilities.

In embodiments, the Mobile Phone Monitoring Safety System for Vehicles App works in unison with the sensor, camera, and external interface to monitor, manage and potentially restrict the active use of a keypad on a mobile phone or other equipment with internet capabilities.

In embodiments, the system, including the App, is operable to remain in sleep mode unless a speed range has been detected and the mobile phone or other equipment with Internet, Bluetooth or WiFi capabilities is in range of the sensor has been positively identified as being actively used.

If and when close proximity to the sensor and a speed value has been determined, the App will automatically become active and begin to monitor, manage and potentially restrict the use of the mobile phone or other electronic equipment with Internet, Bluetooth or WiFi capabilities.

In embodiments, when the App becomes active an alert shall appear informing the user that a restriction will be put in place should use continue. Immediately after the 1st alert appears a 2nd alert will appear asking if phone use was due to an emergency. In the case of an emergency situation, uninterrupted use of the mobile phone or other equipment with Internet, Bluetooth or WiFi capabilities shall continue. If appropriate measures are not taken to ensure safe use of phone or other equipment with Internet, Bluetooth or WiFi capabilities while driving and in range of the sensor, the system will block the use of the phone or other equipment with Internet, Bluetooth or WiFi capabilities. A notification will be sent to the administrator via external computer or device. The mobile phone or other equipment with Internet, Bluetooth or WiFi capabilities will remain locked until the vehicle is a complete stop. Once vehicle has stopped and no speed value registered, the mobile phone or other equipment with nternet, Bluetooth or WiFi capabilities will unlock automatically.

Once a system breach has been registered an alert via email or SMS will be sent to the designated email address or phone number as identified by the administrator.

The administrator shall receive all or some of the following information in embodiments of the invention:

- notification that a breach has occurred;
- telephone number of the user that was in breach;
- the date and time of the breach;
- a still photo (image) or video of the user in breach;
- the speed of vehicle when user was in breach; and
- the location of user when breach occurred.

From the foregoing, it is apparent that embodiments of the present invention can be suited to, at least some extent, meet the needs of:

- individuals seeking to self-manage phone usage when driving. Phone restrictions and having to come to a complete stop act as a deterrent to phone use. This self-management is a positive step toward duty of care to self, family and the general public;
- couples who wish to monitor and manage their phone usage while driving, for personal benefit and safe practices;
- families that find the temptation to text while driving and wish to better manage the safe use of mobile phones while driving amongst the whole family (or family members who have an active safety system according to an embodiment of the invention installed);

- companies can install the system as part of their diligence toward employee and property safety. All information relating to use of mobile phone when driving will be received by the email address or phone number as nominated by the purchaser or authorised person, in embodiments;
- fleet vehicles can install the system as part of their diligence toward employee and property safety. All information relating to use of mobile phone when driving will be received by the email address or phone number as nominated by the purchaser or authorised person, in embodiments; and
- mining companies can install the system as part of their diligence toward employee and property safety. All information relating to use of mobile phone when driving will be received by the email address or phone number as nominated by the purchaser or authorised person, in embodiments.

Embodiments of the invention may be designed to reinforce positive behaviors around the use of mobile phones when driving a vehicle, for the benefit and safety of self, community and environment.

Table 1 below shows features of embodiments of the invention.

| Sensor | Software App | Camera | External Interface | Mobile Phone or other electronic device |
|---|---|---|---|---|
| Sensor capable of being mounted in several specified locations Will have a detection range setting of 0-100cms in relation to the driver to the driver. Will have wireless detection of vehicle speed value | Software/App Monitors, manages and restricts the use of mobile electronic equipment when it is in range of the sensor and a speed value of the vehicle has been captured. The system will be able to be pre-programmed to allow certain functions to remain normal | A) Internal camera technology currently found in mobile phones B) Front facing camera (towards driver) to be mounted on windscreen for driver positive identification. Camera can be for the purpose of both still photography live recording | External computer or other electronic equipment with internet, Bluetooth or WiFi capabilities, for monitoring and managing the system Reporting will take place if a breach occurs. Ipad | Mobile Phone or other any other device with internet, Bluetooth or WiFi capabilities will be subject to monitoring, and restriction when used in range of the sensor. |
| Tamper proof seal attached to the bottom of the sensor. Will communicate evidence of tampering to external interface If seal is semi-hard fitted | | C) Dual facing and recording external camera to be mounted on window screen for driver positive identification, and outward facing dash camera capabilities Tamper proof seal to attach external camera to windscreen. Will communicate evidence of tampering to external interface If seal is semi-hard fitted | Mobile Phone These are only few examples. Other handheld interface technologies with internet capabilities will also be subject to monitoring and restricting actions. | |

Table 2 below shows features of proposed products of the safety system according to embodiments of the invention

| PRODUCTS | | |
|---|---|---|
| Standard System (1) Minimal Viable Product | Premium System (2) | Deluxe System (3) |
| Sensor capable of being mounted in several specified locations. Will have a detection range setting of 0-100cms in relation to the driver to the driver. Will have wireless detection of vehicle speed value. | Sensor capable of being mounted in several specified locations. Will have a detection range setting of 0-100cms in relation to the driver to the driver. Will have wireless detection of vehicle speed value. | Sensor capable of being mounted in several specified locations. Will have a detection range setting of 0-100cms in relation to the driver to the driver. Will have wireless detection of vehicle speed value. |
| Software monitors, manages and restricts the use of mobile electronic equipment when it is in range of the sensor and a speed value of the vehicle has been captured. | Software monitors, manages and restricts the use of mobile electronic equipment when it is in range of the sensor and a speed value of the vehicle has been captured. | Software monitors, manages and restricts the use of mobile electronic equipment when it is in range of the sensor and a speed value of the vehicle has been captured. |
| The system will be able to be pre-programmed to allow certain functions to remain normal. | The system will be able to be pre-programmed to allow certain functions to remain normal. | The system will be able to be pre-programmed to allow certain functions to remain normal. |
| Internal camera technology currently found in mobile phones Allows for positive Identification of persons who have registered to the system. | Internal camera technology currently found in mobile phones. | Internal camera technology currently found in mobile phones. |
| All 3 systems/products will connect to the external interface; Being either a computer or other electronic equipment with internet, Bluetooth or WiFi capabilities, for monitoring and managing the system. Reporting will take place if a breach occurs. | Allows for positive Identification of persons who have registered to the system. Front facing camera (towards driver) to be mounted on windscreen for driver positive identification. Camera can be used for both still photography & live recording. Will achieve positive identification of the driver even when not registered to the system. | Allows for positive Identification of persons who have registered to the system. Front facing camera (towards driver) to be mounted on windscreen for driver positive identification. Camera can be used for both still photography live recording Will achieve positive identification of the driver even when not registered to the system. Dual facing and recording external camera to be mounted on window screen for both positive identification of the driver and outward facing dash camera capabilities. |

## Interpretation

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein. For the purposes of the present invention, additional terms are defined below. Furthermore, all definitions, as defined and used herein, should be understood to control over dictionary definitions, definitions in documents incorporated by reference, and/or ordinary meanings of the defined terms unless there is doubt as to the meaning of a particular term, in which case the common dictionary definition and/or common usage of the term will prevail.

The terminology used herein is for the purpose of describing particular embodiments only and is not intended to be limiting of the invention. As used herein, the singular articles "a", "an" and "the" are intended to include the plural forms as well, unless the context clearly indicates otherwise and thus are used herein to refer to one or to more than one (i.e. to "at least one") of the grammatical object of the article. By way of example, the phrase "an element" refers to one element or more than one element.

The term "about" is used herein to refer to quantities that vary by as much as 30%, preferably by as much as 20%, and more preferably by as much as 10% to a reference quantity. The use of the word 'about' to qualify a number is merely an express indication that the number is not to be construed as a precise value.

Throughout this specification, unless the context requires otherwise, the words "comprise", "comprises" and "comprising" will be understood to imply the inclusion of a stated step or element or group of steps or elements but not the exclusion of any other step or element or group of steps or elements.

The term "real-time" for example "displaying real-time data," refers to the display of the data without intentional delay, given the processing limitations of the system and the time required to accurately measure the data.

As used herein, the term "exemplary" is used in the sense of providing examples, as opposed to indicating quality. That is, an "exemplary embodiment" is an embodiment provided as an example, as opposed to necessarily being an embodiment of exemplary quality for example serving as a desirable model or representing the best of its kind.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of or "exactly one of," or, when used in the claims, "consisting of' will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of,'.' when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

*Bus*

In the context of this document, the term "bus" and its derivatives, while being described in a preferred embodiment as being a communication bus subsystem for interconnecting various . devices including by way of parallel connectivity such as Industry Standard Architecture (ISA), conventional Peripheral Component Interconnect (PCI) and the like or serial connectivity such as PCI Express (PCIe), Serial Advanced Technology Attachment (Serial ATA) and the like, should be construed broadly herein as any system for communicating data.

*In accordance with:*

As described herein, 'in accordance with' may also mean 'as a function of and is not necessarily limited to the integers specified in relation thereto.

*Composite items*

As described herein, 'a computer implemented method' should not necessarily be inferred as being performed by a single computing device such that the steps of the method may be performed by more than one cooperating computing devices.

Similarly objects as used herein such as 'web server', 'server', 'client computing device', 'computer readable medium' and the like should not necessarily be construed as being a single object, and may be implemented as a two or more objects in cooperation, such as, for example, a web server being construed as two or more web servers in a server farm cooperating to achieve a desired goal or a computer readable medium being distributed in a composite manner, such as program code being provided on a compact disk activatable by a license key downloadable from a computer network.

*Database:*

In the context of this document, the term "database" and its derivatives may be used to describe a single database, a set of databases, a system of databases or the like. The system of databases may comprise a set of databases wherein the set of databases may be stored on a single implementation or span across multiple implementations. The term "database" is also not limited to refer to a certain database format rather may refer to any database format. For example, database formats may include MySQL, MySQLi , XML or the like.

*Wireless:*

The invention may be embodied using devices conforming to other network standards and for other applications, including, for example other WLAN standards and other wireless standards. Applications that can be accommodated include IEEE 802.11 wireless LANs and links, and wireless Ethernet.

In the context of this document, the term "wireless" and its derivatives may be used to describe circuits, devices, systems, methods, techniques, communications channels, etc., that may communicate data through the use of modulated electromagnetic radiation through a non-solid medium. The term does not imply that the associated devices do not contain any wires, although in some embodiments they might not. In the context of this document, the term "wired" and its derivatives may be used to describe circuits, devices, systems, methods, techniques, communications channels, etc., that may communicate data through the use of modulated electromagnetic radiation through a solid medium. The term does not imply that the associated devices are coupled by electrically conductive wires.

*Processes:*

Unless specifically stated otherwise, as apparent from the following discussions, it is appreciated that throughout the specification discussions utilizing terms such as "processing", "computing", "calculating", "determining", "analysing" or the like, refer to the action and/or processes of a computer or computing system, or similar electronic computing device, that manipulate and/or transform data represented as physical, such as electronic, quantities into other data similarly represented as physical quantities.

*Processor:*

In a similar manner, the term "processor" may refer to any device or portion of a device that processes electronic data, e.g., from registers and/or memory to transform that electronic data into other electronic data that, e.g., may be stored in registers and/or memory. A "computer" or a "computing device" or a "computing machine" or a "computing platform" may include one or more processors.

The methodologies described herein are, in one embodiment, performable by one or more processors that accept computer-readable (also called machine-readable) code containing a set of instructions that when executed by one or more of the processors carry out at least one of the methods described herein. Any processor capable of executing a set of instructions (sequential or otherwise) that specify actions to be taken are included. Thus, one example is a typical processing system that includes one or more processors. The processing system further may include a memory subsystem including main RAM and/or a static RAM, and/or ROM.

*Computer-Readable Medium:*

Furthermore, a computer-readable carrier medium may form, or be included in a computer program product. A computer program product can be stored on a computer usable carrier medium, the computer program product comprising a computer readable program means for causing a processor to perform a method as described herein.

*Networked or Multiple Processors:*

In alternative embodiments, the one or more processors operate as a standalone device or may be connected, e.g., networked to other processor(s), in a networked deployment, the one or more processors may operate in the capacity of a server or a client machine in server-client network environment, or as a peer machine in a peer-to-peer or distributed network environment. The one or more processors may form a web appliance, a network router, switch or bridge, or any machine capable of executing a set of instructions (sequential or otherwise) that specify actions to be taken by that machine.

Note that while some diagram(s) only show(s) a single processor and a single memory that carries the computer-readable code, those in the art will understand that many of the components described above are included, but not explicitly shown or described in order not to obscure the inventive aspect. For example, while only a single machine is illustrated, the term "machine" shall also be taken to include any collection of machines that individually or jointly execute a set (or multiple sets) of instructions to perform any one or more of the methodologies discussed herein.

*Additional Embodiments:*

Thus, one embodiment of each of the methods described herein is in the form of a computer-readable carrier medium, carrying a set of instructions, e.g., a computer program that are for execution on one or more processors. Thus, as will be appreciated by those skilled in the art, embodiments of the present invention may be embodied as a method, an apparatus such as a special purpose apparatus, an apparatus such as a data processing system, or a computer• readable carrier medium. The computer-readable carrier medium carries computer readable code including a set of instructions that when executed on one or more processors cause a processor or processors to implement a method. Accordingly, aspects of the present invention may take the form of a method, an entirely hardware embodiment, an entirely software embodiment or an embodiment combining software and hardware aspects. Furthermore, the present invention may· take the form of carrier medium (e.g., a computer program product on a computer-readable storage medium) carrying computer-readable program code embodied in the medium.

*Carrier Medium:*

The software may further be transmitted or received over a network via a network interface device. While the carrier medium is shown in an example embodiment to be a single medium, the term "carrier medium" should be taken to include a single medium or multiple media (e.g., a centralized or distributed database, arid/or associated caches and servers) that store the one or more sets of instructions. The term "carrier medium" shall also be taken to include any medium that is capable of storing, 'encodlnq or carrying a set of instructions for execution by one or more of the processors and that cause the one or more processors to perform any one or more of the methodologies of the present invention. A carrier medium may take many forms, including but not limited to, non-volatile media, volatile media, and transmission media.

*Implementation:*

It will be understood that the steps of methods discussed are performed in one embodiment by an appropriate processor (or processors) of a processing (i.e., computer) system executing instructions (computer-readable code) stored in storage. It will also be understood that the invention is not limited to any particular implementation or programming technique and that the invention may be implemented using any appropriate techniques for implementing the functionality described herein. The invention is not limited to any particular programming language or operating system.

*Means For Carrying out a Method or Function*

Furthermore, some of the embodiments are described herein as a method or combination of elements of a method that can be implemented by a processor of a processor device, computer system, or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

*Connected*

Similarly, it is to be noticed that the term connected, when used in the claims, should not be interpreted as being imitative to direct connections only. Thus, the scope of the expression a device A connected to a device B should not be limited to devices or systems wherein an output of device A is directly connected to an input of device B. It means that there exists a path between an output of A and an input of B which may be a path including other devices or means. "Connected" may mean that two or more elements are either in direct physical or electrical contact, or that two or more elements are not in direct contact with each other but yet still co-operate or interact with each other

*Embodiments:*

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.
Similarly it should be appreciated that in the above description of example embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description of Specific Embodiments are hereby expressly incorporated into this Detailed Description of Specific Embodiments, with each claim standing on its own as a separate embodiment of this invention.
Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

*Different Instances of Objects*

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

*Specific Details*

In the description provided herein, numerous specific details are set forth. However, it is understood that embodiments of the invention may be practiced without these specific details. In other instances, well-known methods, structures and techniques have not been shown in detail in order not to obscure an understanding of this description.

*Terminology*

In describing the preferred embodiment of the invention illustrated in the drawings, specific terminology will be resorted to for the sake of clarity. However, the invention is not intended to be limited to the specific terms so selected, and it is to be understood that each specific term includes all technical equivalents which operate in a similar manner to accomplish a similar technical purpose. Terms such as "forward", "rearward", "radially", "peripherally", "upwardly", "downwardly", "top", "bottom", "under" and the like are used as words of convenience to provide reference points and are not to be construed as limiting terms.
As used herein the term "and/or" means "and" or "or", or both.
As used herein "(s)" following a noun means the plural and/or singular forms of the noun.

*Comprising and Including*

In the claims which follow and in the preceding description of the invention, except where the context requires otherwise due to express language or necessary implication, the word "comprise" or variations such as "comprises" or "comprising" are used in an inclusive sense, i.e. to specify the presence of the stated features but not to preclude the presence or addition of further features in various embodiments of the invention.

Any one of the terms: including or which includes or that includes as used herein is also an open term that also means including at least the elements/features that follow the term, but not excluding others. Thus, including is synonymous with and means comprising.

*Scope of Invention*

Thus, while there has been described what are believed to be the preferred embodiments of the invention, those skilled in the art will recognize that other and further modifications may be made thereto without departing from the spirit of the invention, and it is intended to claim all such changes and modifications as fall within the scope of the invention. Functionality may be added or deleted from the block diagrams and operations may be interchanged among functional blocks. Steps may be added or deleted to methods described within the scope of the present invention.

Although the invention has been described with reference to specific examples, it will be appreciated by those skilled in the art that the invention may be embodied in many other forms.

*Industrial Applicability*

It is apparent from the above, that the embodiments described are applicable to automotive industry, road and/or traffic safety and other applicable industries.

**Claims**

1.  A system for monitoring and restricting a usage of a computing device associated with a person while driving a vehicle, the usage comprising one or more operations of the computing device, the system comprising:

    a sensor;
    an image capture device to capture a set of images of the person;
    a processor in communication with the sensor and the image capture device, the processor is configured by one or more machine-readable instructions to
    determine the vehicle is in motion and the computing device is within a predetermined range of distance of the sensor;
    detect the usage of the computing device by the person;
    determine usage information in relation to the usage;
    restrict operation of the computing device to disable the usage of the computing device;
    receive the set of images of the person form the image capture device;
    generate a usage report including the set of images and the usage information; and
    send the usage report to a server for the report to be stored on the server.

2.  The system of claim 1, wherein the system further comprises a Global Positioning System (GPS) receiver connected to the processor, the GPS receiver is configured to receive from a Global Positioning System (GPS) a first geographic location of the vehicle at a first time instant;

    receive from the GPS a second geographic location of the vehicle at a second time instant; and
    send the first geographic location, the first time instant, the second geographic location, and the second time instant to the processor;
    and processor is further configured to determine the vehicle is in motion by determining a travelling speed of the vehicle based on the first geographic location, the first time instant, the second geographic location, and the second time instant;
    and
    determining the vehicle is in motion if the travelling speed of the vehicle is above a threshold.

3.  The system of claim 1 or claim 2, wherein the processor is further configured to determine the computing device is within the predetermined range of distance of the sensor by:

    obtaining a wireless signal transmitted from the sensor to the computing device, the wireless signal being transmitted at a power that allows the computing device to receive the wireless signal if the computing device is within the predetermined range of distance from the sensor; and
determining the computing device is within the predetermined range of distance.

4. The system of any one of claims 1 - 3, wherein the processor is further configured to determine the vehicle is in motion by receiving a speed value from a speed sensor of the vehicle.

5. The system of any one of claims 1 - 4, wherein when in use the sensor is mounted at any of the following location:

a steering wheel of the vehicle;
a windscreen of the vehicle;
a window on a side of a driver of the vehicle;
a driver seat of the vehicle; and
a front dashboard of the vehicle.

6. A method for monitoring and restricting a usage of a computing device associated with a person while driving a vehicle, the usage comprising one or more operations of the computing device, the method comprising steps of:

determining the vehicle is in motion and the computing device is within a predetermined range of distance of a sensor;
detecting the usage of the computing device by the person;
determining usage information in relation to the usage;
restricting operation of the computing device to disable the usage of the computing device;
receiving a set of images of the person from an image capture device that captures the set of images of the person;
generating a usage report including the set of images and the usage information; and
sending the usage report to a server for the report to be stored on the server.

7. The method of claim 6, wherein determining the vehicle is in motion comprises:

receiving from a Global Positioning System (GPS) a first geographic location of the vehicle at a first time instant;
receiving from the GPS a second geographic location of the vehicle at a second time instant;
determining a travelling speed of the vehicle based on the first geographic location, the first time instant, the second geographic location, and the second time instant; and
determining the vehicle is in motion if the travelling speed of the vehicle is above a threshold.

8. The method of claim 6 or claim 7, wherein determining the computing device is within a predetermined range of distance of the sensor comprises:

obtaining a wireless signal transmitted from the sensor to the computing device, the wireless signal being transmitted at a power that allows the computing device to receive the wireless signal if the computing device is within the predetermined range of distance from the sensor; and
determining the computing device is within the-predetermined range of distance.

9. The system of any one of claims 1 - 5 or the method of any one of claims 6 - 8, wherein the wireless signal comprises a Wi-Fi network signal and a Bluetooth network signal.

10. The system of any one of claims 1 - 5 or the method of any one of claims 6 - 9, wherein the predetermined range of distance is between 0 meter and 1 meter.

11. The system of any one of claims 1 - 5 or the method of any one of claims 6 - 10, wherein the predetermined range of distance is between 0 meter and 1.5 meters.

12. The system of any one of claims 1 - 5 or the method of any one of claims 6 - 11, wherein the usage comprises one or more of the following operations:

a use of an input interface of the computing device;
a making of a call;
a receiving of a call; and

a reading of a message.

13. The system of any one of claims 1 - 5 or the method of any one of claims 6 - 12, wherein the usage information comprises a timestamp corresponding to a time instance of the usage.

14. The system of any one of claims 1 - 5 or the method of any one of claims 6 - 13; wherein the usage information further comprises a geographical location tag corresponding to a location of the vehicle when the usage is detected.

<u>100</u>

Fig. 1

Fig. 2

determining the vehicle is in motion and the mobile computing device is within a predetermined range of distance of a sensor ⟋310

detecting the usage of the mobile computing device by the person ⟋320

determining usage information in relation to the usage ⟋330

restricting operation of the mobile computing device to disable the usage of the mobile computing device ⟋340

receiving the set of images of the person from the image capture device ⟋350

generating a usage report including the set of images and the usage information ⟋360

sending the usage report to a server for the report to be stored on the server ⟋370

Fig. 3

EP 3 533 654 A1

Fig. 4

28

EP 3 533 654 A1

Fig. 5

29

Fig. 6

**400**

OBTAIN A SPEED VALUE OF A TRAVELLING SPEED OF A VEHICLE — 410

GENERATE A MOTION SIGNAL INDICATIVE OF THE VEHICLE BEING IN MOTION — 420

TRANSMIT THE MOTION SIGNAL TO THE MOBILE COMPUTING DEVICE, THROUGH THE NETWORK — 430

CONFIRM A PRESENCE OF A MOBILE COMPUTING DEVICE WITHIN A PREDETERMINED RANGE OF DISTANCE, ON BASIS OF A STRENGTH OF A NETWORK — 440

DETECT USAGE OF THE MOBILE COMPUTING DEVICE FOR ONE OR MORE RESTRICTED OPERATIONS — 450

BLOCK THE MOBILE COMPUTING DEVICE AGAINST THE USAGE, ON RECEIVING THE SIGNAL AT THE MOBILE COMPUTING DEVICE — 460

Fig. 7

**500**

500 →

```
                                                                    510
┌────────────────────────────────────────────────────────┐   ⌐
│  OBTAIN A SPEED VALUE OF A TRAVELLING SPEED OF A         │
│  VEHICLE AND TRANSMIT THE SPEED VALUE TO A MOBILE        │
│  COMPUTING DEVICE THROUGH A NETWORK                      │
└────────────────────────────────────────────────────────┘
                            │
                            ▼
                                                                    520
┌────────────────────────────────────────────────────────┐   ⌐
│  CONFIRM A PRESENCE OF THE MOBILE COMPUTING DEVICE       │
│  WITHIN A PREDETERMINED RANGE OF DISTANCE OF A           │
│  SECOND DEVICE, ON BASIS OF A STRENGTH OF THE            │
│  NETWORK                                                 │
└────────────────────────────────────────────────────────┘
                            │
                            ▼
                                                                    530
┌────────────────────────────────────────────────────────┐   ⌐
│  DETECT USAGE OF THE MOBILE COMPUTING DEVICE FOR         │
│  ONE OR MORE RESTRICTED OPERATIONS                       │
└────────────────────────────────────────────────────────┘
                            │
                            ▼
                                                                    540
┌────────────────────────────────────────────────────────┐   ⌐
│  BLOCK THE MOBILE COMPUTING DEVICE AGAINST THE           │
│  USAGE                                                   │
└────────────────────────────────────────────────────────┘
```

Fig. 8

**600**

650

660 HUMAN INTERFACE DEVICES

PROCESSOR

6000

STORAGE MEDIUM READER

630

STORAGE MEDIA

620

6050 AUDIO DEVICES

690 PC DEVICES

I/O INTERFACE

640

NETWORK INTERFACE

670

NETWORK

680

6030 STORAGE DEVICE

6010

6020

610 SEMICONDUCTOR MEMORY

VIDEO INTERFACE

DISPLAY DEVICE

Fig. 9

MOBILE PHONE MONITORING SAFETY SYSTEM APP FUNCTION

IS YOUR VEHICLE FITTED WITH THE TAMBAL TRAVELLER (TT) SYSTEM AND IN ACTIVE MODE?

ARE YOU ACTIVELY USING THE KEYPAD OF YOUR PHONE WHILST THE VEHICLE IS IN MOTION?

YES

NO

AN ALERT WILL APPEAR IDENTIFYING PROHIBITED USE OF THE PHONE OR OTHER EQUIPMENT WITH INTERNET CAPABILITIES. THE SYSTEM WILL PROCEED TO RESTRICT USAGE. HAVE YOU SINCE CEASED OPERATION WHILST VEHICLE IS IN MOTION?

YES

A SECOND ALERT WILL APPEAR ASKING IF TELEPHONE USAGE IS AN EMERGENCY. DO YOU REQUIRE EMERGENCY SERVICES?

NO

YES

NO

THE DRIVER WILL HAVE THE OPTION TO CONTACT THE FOLLOWING EMERGENCY SERVICES. NORMAL PHONE SERVICE WILL REMAIN

AMBULANCE

POLICE

FIRE

THE DRIVER WILL BE CONNECTED TO EMERGENCY SERVICES AND IS EXPECTED TO PULL OVER IN A SAFE LOCATION AS SOON AS PRACTIABLE.

TELEPHONE KEYPAD WILL LOCK, AND USE WILL BE RESTRICTED UNTIL VEHICLE HAS BEEN BOUGHT TO A COMPLETE STOP. WHEN THE VEHICLE IS STATIONARY THE KEYPAD WILL AUTOMATIALLY UNLOCK. A NOTIFICATION, IMAGE OR VIDEO WILL BE CAPTURED AND SENT TO THE ADMINISTRATOR INFORMING OF THE BREACH.

TAMBAL TRAVELLER WILL NOT RESTRICT, DISABLE OR AFFECT THE NORMAL OPERATION OR FUNCTION OF THE MOBILE PHONE.

Fig. 10

Europäisches
Patentamt

European
Patent Office

Office européen
des brevets

# EUROPEAN SEARCH REPORT

Application Number

EP 18 19 1705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/316581 A1 (EWERT MARLON RAMON [DE]) 2 November 2017 (2017-11-02) * abstract * * paragraph [0013] - paragraph [0048] * * figure 1 * * claim 1 * | 1-14 | INV. B60K28/02 B60W40/08 |
| X | US 2016/101784 A1 (OLSON BRIAN [US] ET AL) 14 April 2016 (2016-04-14) * paragraphs [0017] - [0060] * * figures 1-7, 11, 14 * * claim 1 * | 1-14 | |
| X | US 2012/214463 A1 (SMITH MICHAEL J [US] ET AL) 23 August 2012 (2012-08-23) * abstract * * paragraph [0010] - paragraph [0051] * * figures 1, 3, 5 * | 1-14 | |
| X | EP 3 255 868 A1 (TOYOTA ENG & MFG NORTH AMERICA [US]) 13 December 2017 (2017-12-13) * abstract * * paragraphs [0020], [0021], [0026], [0030] - [0033] * * figures 1-3 * | 1-14 | TECHNICAL FIELDS SEARCHED (IPC) B60K B60W |

The present search report has been drawn up for all claims

| Place of search | Date of completion of the search | Examiner |
|---|---|---|
| The Hague | 8 March 2019 | Van den Bosch, I |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 19 1705

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2019

| Patent document cited in search report | | Publication date | Patent family member(s) | | Publication date |
|---|---|---|---|---|---|
| US 2017316581 | A1 | 02-11-2017 | CN 107415861 A<br>DE 102016207353 A1<br>US 2017316581 A1 | | 01-12-2017<br>02-11-2017<br>02-11-2017 |
| US 2016101784 | A1 | 14-04-2016 | NONE | | |
| US 2012214463 | A1 | 23-08-2012 | NONE | | |
| EP 3255868 | A1 | 13-12-2017 | EP 3255868 A1<br>JP 2017225114 A<br>US 2017353597 A1 | | 13-12-2017<br>21-12-2017<br>07-12-2017 |

EPO FORM P0459

For more details about this annex : see Official Journal of the European Patent Office, No. 12/82